# EUROPÄISCHE PATENTANMELDUNG

(11) **EP 4 485 759 A1**
(43) Veröffentlichungstag der Anmeldung: **01.01.2025**
(21) Anmeldenummer: 23182133.1
(22) Anmeldetag: 28.06.2023
(51) Int. Cl.: H02K 3/493, H02K 15/00, H02K 15/12, H01F 1/26, H01F 1/28

(54) **NUTFÜLLUNG MITTELS ZWEIKOMPONENTIGEM DUROMER-SYSTEM BEI ELEKTRISCHER MASCHINE**

(71) Anmelder: Siemens Aktiengesellschaft, 80333 München (DE)
(72) Erfinder: Büttner, Klaus, 97618 Hollstadt (DE); Katzenberger, Tobias, 97631 Bad Königshofen STT Untereßfeld (DE); Kirchner, Florian, 97705 Burkardroth (DE); Kirchner, Klaus, 97645 Ostheim (DE); Plochmann, Bastian, 91413 Neustadt an der Aisch (DE); Warmuth, Matthias, 97618 Windshausen (DE)
(74) Vertreter: Siemens Patent Attorneys

(57) **Zusammenfassung**

Ein Nutverschluss einer Wicklungsnut einer elektrischen Maschine soll effizient hergestellt werden. Dazu werden eine erste Komponente eines zweikomponentigen Duromersystems, wobei in die erste Komponente magnetisierbare Partikel eingemischt sind, und eine zweite Komponente des zweikomponentigen Duromersystems, wobei in die zweite Komponente ebenfalls magnetisierbare Partikel eingemischt sind, bereitgestellt. Die beiden Komponenten werden gemischt und in die Nut (1) der elektrischen Maschine eingebracht, wo sie aushärten.

## Beschreibung

Die vorliegende Erfindung betrifft ein Verfahren zum Füllen einer Nut einer elektrischen Maschine. Darüber hinaus betrifft die vorliegende Erfindung eine entsprechende Vorrichtung zum Füllen einer solchen Nut.

Niederspannungsmotoren werden typischerweise mit einer Runddraht-Wicklung hergestellt, welche im Voraus über einen Flyer-/Schablonenwickler zu Spulen gewickelt werden und im Anschluss vollautomatisiert in das mit den jeweiligen Nuten versehene Blechpaket eingezogen werden. Hierbei ist die kritische Stelle immer der Nutspalt, welcher durch die zwei benachbarten Nutzähne definiert wird. Dieser ist deutlich kleiner als die Nut an sich, wodurch sich wünschenswerterweise die Magnetkreise effektiver schließen, jedoch die gesamte Kupferwicklung durch diese Querschnitt-/Verjüngung gezogen werden muss. Um ideale Magnetfeldeigenschaften im Blechpaket zu generieren, müsste der Nutspalt derart schmal gewählt werden, dass die Nutspaltbreite kleiner als der Durchmesser eines Einzeldrahtes der Wicklung ist. Dies würde jedoch fertigungstechnisch zu großen Problemen führen, da keine typischen Wickel-Einziehverfahren mehr verwendet werden können. Die aktuellen Blechgeometrien sind hierbei eine Art Kompromiss, der beide Notwendigkeiten einbezieht. Der Nutspalt hat ca. die lichte Breite von zwei bis vier Einzeldrähten (Durchmesser), wodurch durch eine geeignete Lamellenführung beim Einzug das Kupferbündel auf diese Breite partiell komprimiert wird und der Nachteil in Bezug auf die Magnetkreisdimensionierung akzeptabel bleibt.

Insbesondere bei größeren Maschinen (Mittelspannungs- oder Hochspannungsmotoren) mit höheren Anforderungen wird der vorhandene Nutspalt im Anschluss mittels eines magnetischen Nutverschlusses verschlossen. Hierbei handelt es sich um magnetische Eisenpartikel verschiedenster Ausführungen, welche meist im Zusammenspiel mit einem Kunststoff als "Compound" vorliegen. Dieser "Compound" (Füllstoffpartikel = Eisen, Matrix = Kunststoff) wird oftmals vorgefertigt und als Nutkeile, welche mechanisch eingeschoben werden, verwendet. Dies hat den Nachteil, dass sich der Nutverschluss im laufenden Betrieb der Maschine aufgrund von Vibrationen und auftretenden Kräften lockern und lösen kann und damit den Läufer blockiert und somit zum Ausfall der Maschine führt.

Zum anderen sind vorgefertigte Nutspalte keine wirtschaftliche Lösung für ein variantenreiches Produktportfolio, wie dies oftmals im Bereich der Niederspannungsmotoren vorliegt.

Eine andere Anwendungsform bei Mittel- und Hochspannungsmaschinen ist die Nutzung einer noch unvernetzten, hochgefüllten Paste, bestehend aus Eisenfüllstoffpartikeln und chemischem Reaktivharz (Mischungsverhältnis ca. 90 Gewichtsprozent Eisenfüllstoff, 10 Gewichtsprozent polymere Matrix). Die Masse muss hierbei unter aktiver Kühlung mehrere Stunden geknetet werden, um eine Homogenisierung der Partikel in der Matrix sicherzustellen und dann gekühlt gelagert und transportiert werden, da es sich um eine einkomponentige, reaktive Masse handelt. Die Matrixkomponente ist beispielsweise ein anhydritisch gehärtetes Epoxidharz, welches unter Zuführung höherer Temperatur (150°C, mehrere Stunden) zu einem Formstoff härtet, welcher ausreichend mechanische Festigkeit aufweist und eine Glasübergangstemperatur von über 140°C besitzt, wodurch die Anforderungen der Mittelspannungs- und Hochspannungsmaschinen an das Isoliersystem und die Peripherie erfüllt sind. Aufgrund der Wahl der Matrix und der Eisenfüllstoffzusammensetzung als auch aufgrund der hohen mechanischen Anforderungen an den Endformstoff sowie beim Applizieren sind zusätzliche Additive, wie z.B. Talkum (als Schmierstoff) und Polymerfasern (als Armierung der Masse und Thixotropierung beim Verarbeiten) im einstelligen Gewichtsprozentbereich notwendig. Die Einbringung des Materials geschieht bei Raumtemperatur entweder händisch ("einspachteln") oder durch einen (teil-)automatisierten Raupenauftrag und anschließendem Einpressen mittels einer speziellen Rakel. Die thermische Härtung wird im Anschluss durch einen Heißluftofen beziehungsweise durch die Bestromung der Wicklungen herbeigeführt.

Die Aufgabe der vorliegenden Erfindung besteht darin, eine wirtschaftliche und energiearme Möglichkeit für die Nutfüllung insbesondere bei Niederspannungsmaschinen vorzuschlagen.

Erfindungsgemäß wird diese Aufgabe durch ein Verfahren und eine Vorrichtung entsprechend den unabhängigen Ansprüchen gelöst. Vorteilhafte Weiterbildungen der Erfindung ergeben sich aus den Unteransprüchen.

Der Erfindung liegt die Erkenntnis zugrunde, dass Niederspannungsmotoren, die eine hohe Effizienz aufweisen, nur sehr geringe Leistungsverluste haben, welche sich in einer Erwärmung des Rotors und des Stators manifestieren, wodurch insbesondere im Bereich eines möglichen Nutverschlusses eine Temperatur von über 100°C nahezu ausgeschlossen ist. Dies erlaubt eine neue Sichtweise auf die thermische Stabilität des Isoliersystems und dessen Peripherie. Insbesondere die Peripherie (z.B. der Deckschieber) kann deutlich unterhalb der sonst für das Primärisoliersystem geforderten Wärmeklasse F/H (155°/180°C, 20000 h) liegen, ohne die Lebensdauer oder die Leistungsfähigkeit der Maschine negativ zu beeinflussen.

Aufgrund dieser Entwicklung wird erfindungsgemäß eine alternative Polymerlösung für die Nutfüllung vorgestellt, welche sich als wirtschaftliche und zugleich CO₂-freundliche Lösung (hinsichtlich Applikation und Prozess) insbesondere für Niederspannungsmotoren darstellt.

Erfindungsgemäß wird ein Verfahren zum Füllen einer Nut einer elektrischen Maschine bereitgestellt. Bei der Nut handelt es sich insbesondere um eine Wicklungsnut, in die eine Wicklung beziehungsweise Spule eingezogen werden kann. Die Nut ergibt sich typischerweise in einem Blechpaket eines magnetisch aktiven Teils der elektrischen Maschine. Bei der elektrischen Maschine kann es sich beispielsweise um einen Motor, einen Generator, einen Transformator und dergleichen handeln.

Bei dem Verfahren erfolgt ein Bereitstellen einer ersten Komponente eines zweikomponentigen Duromer-Systems, wobei in die erste Komponente magnetisierbare Partikel eingemischt sind. Beispielsweise handelt es sich bei dem zweikomponentigen Duromer-System um ein Epoxidharz-Härter-System, das nach dem Aushärten ein entsprechendes Duromer ergibt. Die erste Komponente für sich (z.B. Epoxidharz) ist nicht reaktiv, sodass dessen Monomere allein nicht vernetzen. In der Regel ist die erste Komponente mehr oder weniger zähflüssig beziehungsweise viskos. In die erste Komponente sind magnetisierbare Partikel eingemischt. Bei den magnetisierbaren Partikeln kann es sich um ferromagnetische Partikel handeln. Die magnetisierbaren Partikel sollten möglichst homogen in die erste Komponente gemischt sein.

In einem weiteren Schritt des erfindungsgemäßen Verfahrens erfolgt ein Bereitstellen einer zweiten Komponente des zweikomponentigen Duromer-Systems, wobei auch in die zweite Komponente magnetisierbare Partikel eingemischt sind. Bei der zweiten Komponente handelt es sich beispielsweise um den Härter des oben genannten Epoxidharz-Härter-Systems. Auch die zweite Komponente ist für sich genommen nicht reaktiv im Hinblick auf die Polymerisation. In die zweite Komponente sind, wie erwähnt, ebenfalls magnetisierbare Partikel eingemischt. Das Mischen der magnetisierbaren Partikel sowohl in die erste Komponente als auch in die zweite Komponente hat den Vorteil, dass sich die beiden Komponenten einschließlich der magnetisierbaren Partikel zuverlässiger und einfacher mischen lassen als drei Einzelkomponenten (zwei reine Duromerkomponenten und die magnetisierbaren Partikel als dritte Komponente). Bei den magnetisierbaren Partikeln kann es sich in beiden Komponenten um die gleiche Art handeln (z.B. Eisenpulver).

In einem weiteren Schritt des erfindungsgemäßen Verfahrens erfolgt ein Mischen der ersten Komponente mit der zweiten Komponente. Die beiden jeweils für sich genommenen nichtreaktiven Partner werden gemischt, wodurch sie miteinander reagieren und die Polymerisation bewirken. Beispielsweise bewirkt die zweite Komponente als Härter oder Katalysator die Vernetzung der ersten Komponente.

In einem weiteren Verfahrensschritt erfolgt ein Einbringen der gemischten Komponenten in die Nut der elektrischen Maschine. Dabei kann das Mischen der beiden Komponenten gleichzeitig mit dem Einbringen in die Nut erfolgen oder auch unmittelbar davor. Die gemischten Komponenten stellen in der Regel eine viskose Masse dar, die sich als Strang oder Raupe in die Nut einbringen lässt.

Schließlich erfolgt in einem abschließenden Schritt des Verfahrens ein Aushärtenlassen der gemischten Komponenten in der Nut zu einem mit den magnetisierbaren Partikeln versehenen Duromer. In der Regel genügt es, wenn die beiden Komponenten in der Nut miteinander reagieren, wodurch sie zu dem gewünschten Duromer aushärten. Dabei sind die magnetisierbaren Partikel in die Duromermatrix eingebettet.

Durch die vorteilhafte Verwendung von zwei Komponenten, in die jeweils vorab die magnetisierbaren Partikel eingemischt sind, kann der Mischvorgang unmittelbar vor Applikation in die Nut vereinfacht werden und trotzdem kann ein Duromer erzielt werden, in dessen Matrix die magnetisierbaren Partikel sehr homogen verteilt sind.

In einem Ausführungsbeispiel ist vorgesehen, dass die erste Komponente des zweikomponentigen Duromer-Systems ein natürliches Harz, ein Epoxidharz oder eine Komponente eines Zweikomponentenklebstoffs ist. Neben dem natürlichen Harz kann also auch ein Epoxidharz als Kunstharz für das Duromer beziehungsweise den Nutverschluss verwendet werden. Alternativ können auch sonstige Klebstoffe, die nicht auf Harzen basieren, für die Duromer-Matrix verwendet werden. Somit steht für die Erfindung ein weit gefächertes Duromer-Spektrum zur Verfügung.

Bei einem alternativen Ausführungsbeispiel ist die erste Komponente des zweikomponentigen Duromersystems auf Isocyanat-Basis gebildet. Isocyanate sind die wesentlichen Bestandteile von Polyurethanen (PU-Produkten) wie PU-Lacken, PU-Beschichtungen, PU-Schäumen sowie PU-Klebstoffen.

Bei einem besonders bevorzugten Ausführungsbeispiel weist der Härter ein Amin auf. Amine sind organische Verbindungen, die Derivate des Ammoniaks sind und bei denen ein, zwei oder alle drei Wasserstoffatome des Ammoniaks durch Alkylgruppen oder Arylgruppen ersetzt sind oder sich zu mehr oder weniger unterschiedlichen heterocyclischen Ringsystemen zusammengeschlossen haben. Besonders vorteilhaft kann Amin als Härter für Epoxidharze verwendet werden. Derartige Epoxy-Amin-Systeme können gegebenenfalls bei Raumtemperatur aushärten.

In einem weiteren Ausführungsbeispiel ist vorgesehen, dass sowohl in die erste als auch in die zweite Komponente die magnetisierbaren Partikel mit mindestens 50 Gewichtsprozent, insbesondere 75 bis 90 Gewichtsprozent, eingemischt sind. Damit ein hochwertiger Nutverschluss erzielt werden kann, sollten mindestens 50 Gewichtsprozent magnetisierbare Partikel in die Duromer-Matrix eingemischt sein. Besonders vorteilhaft ist es allerdings, wenn der Füllgrad der magnetisierbaren Partikel in der Duromer-Matrix bei 75 bis 90 Gewichtsprozent liegt.

In einem konkreten Ausführungsbeispiel stammen die magnetisierbaren Partikel von einem Eisenpulver, d.h. bei jedem magnetisierbaren Partikel handelt es sich um ein Eisenkorn. Als magnetisierbare Partikel eigenen sich aber auch andere ferromagnetische Materialien.

In einem weiteren Ausführungsbeispiel ist vorgesehen, dass die erste und zweite Komponente in einem Verhältnisbereich von 1,2:1 bis 1:0,8 und insbesondere in dem Verhältnis 1:1 gemischt werden. Das Mischen der beiden Komponenten im nahezu gleichen Verhältnis zueinander hat den Vorteil, dass sich die beiden Komponenten einfacher und gleichmäßiger mischen lassen. Insbesondere sollte auch dann der Füllgrad der magnetisierbaren Partikel in beiden Komponenten gleich hoch sein. Insgesamt lässt sich so ein sehr homogenes Mischbild erzeugen.

In einem weiteren Ausführungsbeispiel ist vorgesehen, dass das Einbringen der gemischten Komponenten in die Nut der elektrischen Maschine mit Hilfe eines Pastendosiersystems erfolgt. Für das Einbringen kann ein konventionelles Pastendosiersystem verwendet werden, wodurch die Wirtschaftlichkeit des gesamten Verfahrens gesteigert werden kann. Bei dem Pastendosiersystem kann es sich um einen Dispenser handeln, der für hochviskose Pasten ausgelegt ist.

In einem weiteren Ausführungsbeispiel erfolgt das Aushärten der Duromeremulsion (größtenteils) bei Raumtemperatur. In diesem Fall ist für das Aushärten keine Heizung bzw. zusätzliche Energie erforderlich, was wiederum Effizienzvorteile für das Verfahren mit sich bringt. Etwaige Reaktionswärme wird hier nicht betrachtet.

In einem Ausführungsbeispiel kann vorgesehen sein, dass nach dem Aushärten ein duroplastischer Formstoff mit einer Glasübergangstemperatur von über 60°C entsteht. Vorzugsweise ergibt sich eine Glasübergangstemperatur zwischen 60°C und 100°C. Dies bedeutet, dass der duroplastische Formstoff beziehungsweise das Duromer ebenfalls bis 60°C hart bleibt und somit die Nutverschluss-Funktion zuverlässig erfüllen kann. Erst bei höheren Temperaturen, die bei sehr effizienten Niederspannungsmotor gar nicht erreicht werden, würde der Nutverschluss plastisch werden.

Bei einer weiteren Ausführungsform des erfindungsgemäßen Verfahrens wird bei dem Einbringen des viskosen Komponentengemisches in die Nut der elektrischen Maschine ein viskoser Strang aus der Gemischmasse auf ein Drahtbündel in der Nut appliziert. Bei dem viskosen Strang handelt es sich um eine sogenannte pastöse "Raupe". Eine solche Raupe besitzt im applizierten Zustand in der Regel einen kreissegmentförmigen Querschnitt und erstreckt sich länglich in Applikationsrichtung. Sie kann günstig mit einer Düse appliziert werden. Üblicherweise wird die Raupe auf einen Deckschieber aufgebracht, der ein Drahtbündel in der Nut typischerweise nach oben abschließt. Somit wird die Raupe in der Regel nicht direkt, sondern indirekt auf das Drahtbündel appliziert.

In einem weiteren Ausführungsbeispiel ist vorgesehen, dass das Drahtbündel unmittelbar vor dem Applizieren des viskosen Strangs in Richtung Nutgrund gedrückt wird. Die in die Nut eingebrachte Wicklung, d.h. das dortige Drahtbündel, lässt sich in der Regel komprimieren. Dabei wird der Deckschieber beziehungsweise die oberste Drahtschicht nach unten zum Nutgrund gedrückt. Dadurch entsteht mehr Raum für das Applizieren des viskosen Duromerstrangs.

Bei einer Weiterentwicklung kann sich das Drahtbündel in der Nut nach dem Applizieren des viskosen Strangs/Raupe entspannen, wobei ein Teil des Strangs/Raupe zur Bildung eines Formschlusses hinter einen Nutvorsprung an der Nut gedrückt wird. Dies ist insbesondere dann der Fall, wenn der viskose Strang breiter als die lichte Öffnung der Nut ist. In diesem Fall werden die über die Nutöffnung hinausragenden Teile des Strangs bei dem Entspannen des Drahtbündels gegen den Nutvorsprung gedrückt, wodurch im Nutspalt ein Hinterschnitt entsteht. Dieser Hinterschnitt sorgt für eine vorteilhafte Fixierung des Duromers im Nutspalt durch Formschluss.

Weiterhin kann vorgesehen sein, dass der viskose Strang nach dem Einbringen in die Nut oberflächenbündig abgezogen wird. Durch das Abziehen kann erreicht werden, dass die Oberfläche des magnetisch aktiven Elements der elektrischen Maschine flach bleibt und das Duromer nicht über den Nutspalt hinausragt. Dadurch kann beispielsweise der Luftspalt zwischen Rotor und Stator sehr gering gehalten werden. Das Abziehen des überflüssigen Materials des viskosen Strangs kann beispielsweise mit der Düse eines Dispensers erfolgen und/oder mit einem separaten Werkzeug.

Die obige Aufgabe wird erfindungsgemäß auch gelöst durch Vorrichtung zum Füllen einer Nut einer elektrischen Maschine, wobei die Vorrichtung aufweist:
- eine Mischeinrichtung zum Mischen einer ersten Komponente eines zweikomponentigen Duromersystems, wobei in die erste Komponente magnetisierbare Partikel eingemischt sind, und einer zweiten Komponente des zweikomponentigen Duromersystems, wobei in die zweite Komponente magnetisierbare Partikel eingemischt sind, und
- eine Applikationseinrichtung zum Einbringen der gemischten Komponenten in die Nut der elektrischen Maschine.

Die Mischeinrichtung kann einen ersten Schneckenextruder zum Fördern der ersten Komponente, einen zweiten Schneckenextruder zum Fördern der zweiten Komponente und einen Mischer zum Mischen der ersten Komponente von dem ersten Schneckenextruder mit der zweiten Komponente von dem zweiten Schneckenextruder aufweisen. Gegebenenfalls ist am Ausgang des Mischers noch ein dritter Schneckenextruder vorgesehen, der auch Teil der Applikationseinrichtung sein kann. Alternativ weist die Mischeinrichtung zumindest anstelle des ersten und zweiten Schneckenextruders ein statisches Mischrohr zum Mischen beider Komponenten auf.

Der Mischer kann vor der Applikationseinrichtung angeordnet sein. In diesem Fall erfolgt das Mischen unmittelbar vor dem Einbringen beziehungsweise Applizieren der gemischten Komponente in die Nut. Alternativ kann der Mischer auch in die Applikationseinrichtung integriert sein, sodass das Mischen beim Einbringen in die Nut erfolgt.

Die oben im Zusammenhang mit dem erfindungsgemäßen Verfahrenen geschilderten Vorteile und Varianten gelten sinngemäß auch für die erfindungsgemäße Vorrichtung. Dabei können die einzelnen Verfahrensmerkmale als funktionelle Merkmale der Vorrichtung gesehen werden.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Die vorliegende Erfindung wird nun anhand der beigefügten Zeichnungen näher erläutert, in denen zeigen:
- FIG 1: eine Nut einer elektrischen Maschine gefüllt mit einem Drahtbündel;
- FIG 2: die Nut von FIG 1 mit eingepresstem Drahtbündel;
- FIG 3: die Nut mit applizierter Nutverschlussmasse;
- FIG 4: die Nut mit verschlossenem Nutschlitz;
- FIG 5: die Applikation der Nutverschlussmasse in Nutlängsrichtung; und
- FIG 6: ein weiteres Ausführungsbeispiel für die Applikation der Nutverschlussmasse.

Die nachfolgend geschilderten Ausführungsbeispiele stellen bevorzugte Ausführungsformen der vorliegenden Erfindung dar.

Die Tatsache, dass insbesondere Niederspannungsmotoren sehr effizient betrieben werden können und der Nutverschluss kaum Temperatur über 100°C erreicht, wird dazu genutzt, den Nutverschluss mittels einer Duromeremulsion herzustellen, in die neben den magnetisierbaren Partikeln auch der Härter in Form von Feststoffpartikeln in die Duromermatrix eingemischt beziehungsweise eingeknetet ist.

In einer konkreten Ausgestaltung wird die polymere Matrix unabhängig von der Zusammensetzung und der gegebenenfalls Optimierung der Partikelgrößenverteilung des Eisenfüllstoffs durch eine vom Stand der Technik abweichende substituiert. Aufgrund der deutlich kleineren Nutspalte (ca. 2 bis 5 mm im Vergleich zu größeren Maschinen mit ca. 2 cm) ist eine Zugabe von Polymerfasern zur Armierung nicht notwendig. Unabhängig von anderen Merkmalen soll also zumindest eine Ausführungsform darauf beruhen, dass die Duromeremulsion (Gemisch der viskosen Duromerkomponenten) keine Polymerfasern aufweist. Die Applikation der Duromeremulsion kann somit über ein übliches Pastendosiersystem erfolgen, da keine "hochscherende/hochviskose" Komponente zur Paste (d.h. Duromeremulsion) hinzugegeben wird, was üblicherweise die vollautomatisierte Förderung und Einbringung sehr schwierig gemacht hat.

Erfindungsgemäß wird daher zum Füllen einer (Wicklungs-) Nut einer elektrischen Maschine ein zweikomponentiges Duromer-System (z.B. Epoxidharz-System) verwendet, welches im konkreten Fall aus einer Expoxid(A)-Komponente und einer Amin(B)-Komponente bestehen kann. Alternativ könnte gegebenenfalls auch ein PU(Isocyanat)-System verwendet werden. Diese Systeme können bekannter Maßen komplett bei Raumtemperatur härten und bilden somit einen Formstoff, der ohne Zugabe von thermischer Energie aushärtet. Eine Stöchiometrie von 1:1 (oder nahe diesem Verhältnis, z.B. 1:0,8) ist vorteilhaft, um eine geeignete Mischbarkeit der Komponenten sicherzustellen. Beide Komponenten werden jeweils getrennt voneinander mit dem geeigneten (Eisen-) Füllstoff hochgefüllt. Ein Füllgrad von 50 Gewichtsprozent oder 75 Gewichtsprozent, besser sogar 85 - 90 Gewichtsprozent, ist erstrebenswert.

Die beiden mit beispielsweise Eisenfüllstoff hochgefüllten Komponenten liegen typischerweise als zwei nicht-reaktive Pasten vor. Das Fördern und Mischen von hochgefüllten Pasten kann bei einem geeigneten Mischungsverhältnis (1:1 oder ähnlich) über ein statisches Mischrohr bei der Applikation erfolgen.

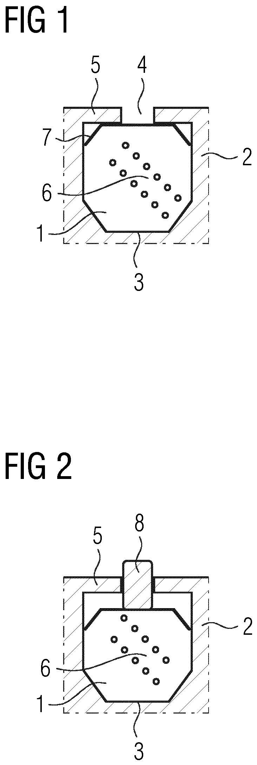

Die Applikation kann also durch Ablegen einer Raupe (= Compound-Paste) in die Nut der elektrischen Maschine erzielt werden. Wie nachfolgend anhand der FIG 1 bis 4 erläutert wird, kann mit der Raupe ein formschlüssiger Nutverschluss erreicht werden, der beispielsweise auf einem Deckschieber liegt und gegebenenfalls radial nach innen mit dem Innenradius des Blechpakets (bei einem Außenstator) abschließt.

Die FIG 1 bis 4 zeigen hierzu eine Nut 1, die in einem Blechpaket 2 ausgebildet ist. Die Nut 1 besitzt einen Nutgrund 3, der beispielsweise bei einem Außenstator radial außen ausgebildet ist. Gegenüber dem Nutgrund 3 befindet sich (bei dem Außenstator radial innen) ein Nutspalt 4. Der Nutspalt 4 befindet sich in Umfangsrichtung zwischen einer oder zwei Nutvorsprüngen 5.

In der Nut 1 befindet sich ein Drahtbündel 6 einer Wicklung der elektrischen Maschine. Das Drahtbündel 6 wurde durch den Nutspalt 4 in die Nut 1 eingelegt. Ein Deckschieber 7, der sich in Längsrichtung der Nut erstreckt und mit den Nutvorsprüngen 5 einen Formschluss bildet, verhindert, dass das Drahtbündel 6 aus der Nut 1 austreten kann. Im Zustand von FIG 1 liegt der Deckschieber 7 durch das Drahtbündel 6 an den Nutvorsprüngen 5 an.

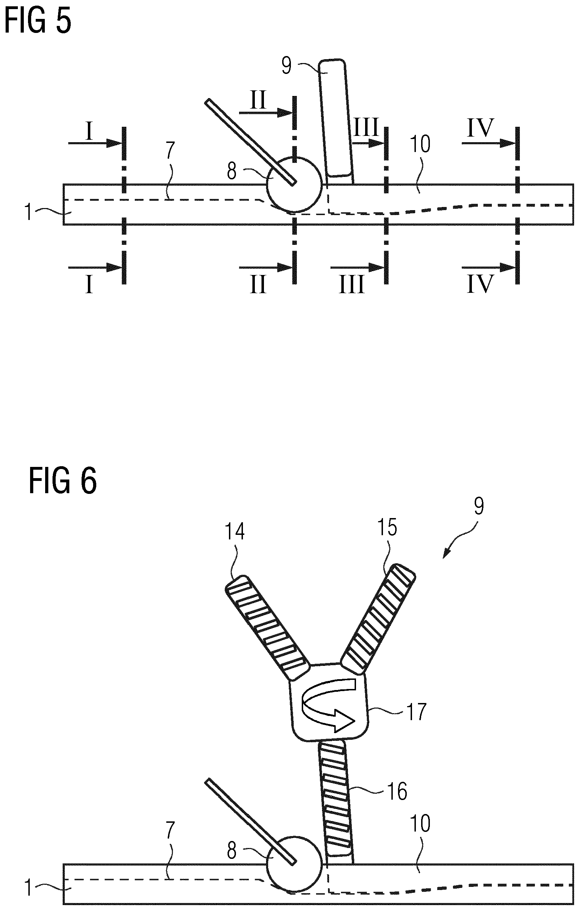

FIG 5 zeigt die Nut 1 im Längsschnitt. Eine Stelle des Querschnitts von FIG 1 vor der Applikation der Raupe/Duromeremulsion ist in FIG 5 mit I bezeichnet.

FIG 2 zeigt einen Querschnitt durch die Nut 1 an der Stelle II von FIG 5. Speziell wird an dieser Stelle durch eine Drückerwalze 8 oder ein anderes geeignetes Werkzeug der Deckschieber 7 und das darunterliegende Drahtbündel 6 in Richtung Nutgrund gedrückt und somit komprimiert. Auch aus FIG 5 ist zu erkennen, dass an der Querschnittstelle II der Deckschieber 7 tiefer in die Nut 1 gedrückt ist.

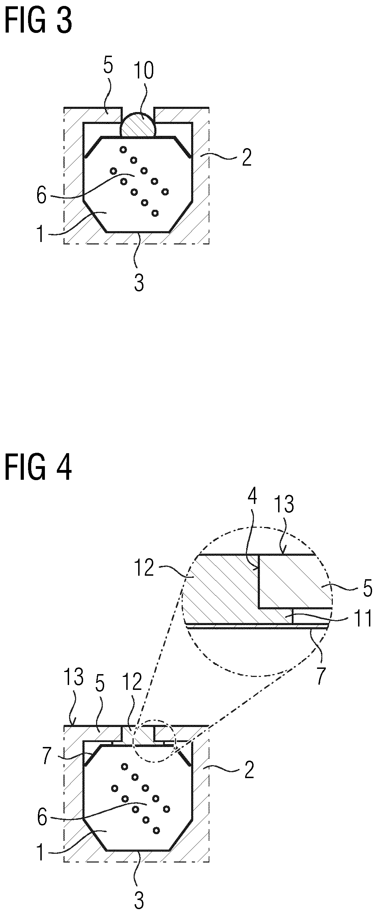

Unmittelbar anschließend an die Drückerwalze 8 wird mit einer Applikationseinrichtung 9 die aus den mit magnetisierbaren Partikeln gefüllten Komponenten gemischte Duromeremulsion als Strang bzw. Raupe 10 auf das Drahtbündel 6 oder den Deckschieber 7 aufgetragen, was FIG 3 an der Querschnittstelle III zeigt. An dieser Querschnittstelle III befindet sich das Drahtbündel 6 bzw. der Deckschieber 7 noch im durch die Drückerwalze 8 komprimierten Zustand, was auch die tiefe Lage des Deckschiebers 7 an der Querschnittstelle III von FIG 5 zeigt.

Die Raupe 10 kann einen kreissegmentförmigen Querschnitt besitzen. Vorzugsweise ist sie etwas breiter als der Nutspalt 4. Dies hat den Vorteil, dass durch Teile der Raupe 10, d.h. der Nutverschlussmasse, die hinter die Nutvorsprünge 5 ragen, Hinterschnitte 11 gebildet werden können, wenn sich das Drahtbündel 6 gemäß FIG 4 wieder entspannt und den Deckschieber 7 zum Nutspalt 4 drückt. Dabei füllt die plastische Raupe 10 den Nutspalt 4, sodass sich der in FIG 4 dargestellte Nutverschluss 12 ergibt, der einen T-förmigen Querschnitt mit den Hinterschnitten 11 besitzt.

Ein vergrößerter Abschnitt des Nutverschlusses 12 ist ebenfalls in FIG 4 dargestellt. Er zeigt, wie insbesondere der Hinterschnitt 11 des Nutverschlusses 12 unter den Nutvorsprung 5 ragt und somit einen Formschluss bildet. Gegebenenfalls wird die Raupe 10 an der Oberseite 13 der Nut 1 abgezogen, damit der Nutverschluss 12 oberflächenbündig mit der Oberseite 12 wird. Für das Abziehen kann die Applikationseinrichtung 9 oder ein separates Werkzeug verwendet werden.

FIG 6 zeigt eine alternative Ausführungsform zu der Applikation von FIG 5. Im Wesentlichen kann auf die Beschreibung von FIG 5 verwiesen werden. Auch hier wird beispielsweise ein Epoxidharz als Matrix bzw. erste Komponente verwendet, und ein Härter (z.B. Amin) als zweite Komponente verwendet.

Die Applikationseinrichtung 9 umfasst hier einen ersten Extruder 14, einen zweiten Extruder 15, einen dritten Extruder 16 und einen Mischer 17. Einer oder mehrere dieser Extruder können Schneckenextruder sein. Insbesondere sollten sie Schneckenextruder für hochviskose Pasten sein.

Durch den ersten Extruder 14 wird die erste Komponente (z.B. Epoxidharz mit Eisenpulver gemischt) in den Mischer 17 gefördert. Mit dem zweiten Extruder 15 wird die zweite Komponente (z.B. Härter mit Eisenpulver gemischt) ebenfalls in den Mischer 17 gefördert. Der Mischer 17 mischt beide Komponenten. Am Ausgang des Mischers 17 befindet sich der dritte Extruder 16, der die gemischten Komponenten zur Nut 1 fördert und dort als Raupe 10 ausstößt.

Bei dem Mischer 17 kann es sich um einen Kneter handeln, der insbesondere für hochviskose Pasten geeignet sein sollte. Die Extruder 14, 15 und 16 sollten so ausgebildet sein, dass keine Trennung von flüssigen und festen Komponenten erfolgt beziehungsweise diese weitestgehend vermieden wird.

Um eine Reinigung des Mischers 17 und der Extruder 14, - 16 zu vermeiden, kann als alternative Applikationseinrichtung ein statisches Mischrohr verwendet werden. Dabei ist auf eine geeignete Stöchiometrie der einzelnen Komponenten zu achten.

Aufgrund der hohen Füllung der Paste mit z.B. Eisenpulver bleibt diese zunächst formstabil in den Nuten und härtet. Die Härtung erfolgt selbständig im Wesentlichen bei Raumtemperatur zu einem Formstoff, welcher eine Glasübergangstemperatur von z.B. 60 bis 100°C aufweist (das verwendete Isolierharz kann im gleichen Bereich liegen).

Wie die obigen Ausführungsbeispiele zeigen, ist somit eine vollautomatisierte Applikation des Nutverschlusses und dabei ein CO₂-effizientes, Zeit- und Energie-unkritisches Härten möglich.

In vorteilhafterweise kann durch separat gefüllten Einzelkomponenten insgesamt ein hoher Füllgrad des Nutverschlusses von beispielsweise 75 bis 90 Gewichtsprozent erzielt werden. Als besonders vorteilhaft erweist sich ein zweikomponentiges Reaktivharzsystem, das bei Raumtemperatur appliziert werden und aushärten kann.

Weiter vorteilhaft ist, dass in der Duromeremulsion keine Faser-Armierung notwendig ist, sodass eine vollautomatisierte Applikation realisierbar ist. Die gegebenenfalls niedrige Glasübergangstemperatur ist für hocheffiziente Niederspannungsmotoren durchaus akzeptabel.

## Patentansprüche

1. Verfahren zum Füllen einer Nut (1) einer elektrischen Maschine
**gekennzeichnet durch**
- Bereitstellen einer ersten Komponente eines zweikomponentigen Duromersystems, wobei in die erste Komponente magnetisierbare Partikel eingemischt sind,
- Bereitstellen einer zweiten Komponente des zweikomponentigen Duromersystems, wobei in die zweite Komponente magnetisierbare Partikel eingemischt sind,
- Mischen der ersten Komponente mit der zweiten Komponente,
- Einbringen der gemischten Komponenten in die Nut (1) der elektrischen Maschine und
- Aushärtenlassen der gemischten Komponenten in der Nut (1) zu einem mit den magnetisierbaren Patikeln versehenen Duromer.

2. Verfahren nach Anspruch 1, wobei die erste Komponente des zweikomponentigen Duromersystems ein natürliches Harz, ein Epoxidharz oder eine Komponente eines Zweikomponentenklebstoffs ist.

3. Verfahren nach Anspruch 1, wobei die erste Komponente des zweikomponentigen Duromersystems auf Isocyanat-Basis gebildet ist.

4. Verfahren nach Anspruch 1 oder 2, wobei die zweite Komponente ein Amin aufweist.

5. Verfahren nach einem der vorhergehenden Ansprüche, wobei sowohl in die erste als auch in die zweite Komponente die magnetisierbaren Partikel mit mindestens 50 Gewichtsprozent, insbesondere 75 bis 90 Gewichtsprozent eingemischt sind.

6. Verfahren nach einem der vorhergehenden Ansprüche, wobei die magnetisierbaren Partikel von einem Eisenpulver stammen.

7. Verfahren nach einem der vorhergehenden Ansprüche, wobei die erste und zweite Komponente in einem Verhältnisbereich von 1,2:1 bis 1:0,8 und insbesondere in dem Verhältnis 1:1 gemischt werden.

8. Verfahren nach einem der vorhergehenden Ansprüche, wobei das Einbringen der gemischten Komponenten in die Nut (1) der elektrischen Maschine mit Hilfe eines Pastendosiersystems erfolgt.

9. Verfahren nach einem der vorhergehenden Ansprüche, wobei das Aushärten der gemischten Komponenten größtenteils bei Raumtemperatur erfolgt.

10. Verfahren nach einem der vorhergehenden Ansprüche, wobei bei dem Einbringen der viskosen Duromeremulsion in die Nut (1) der elektrischen Maschine ein viskoser Strang (10) aus den gemischten Komponenten auf ein Drahtbündel (6) in der Nut (1) appliziert wird.

11. Verfahren nach Anspruch 10, wobei das Drahtbündel (6) unmittelbar vor dem Applizieren des viskosen Strangs (10) in Richtung Nutgrund (3) gedrückt wird.

12. Verfahren nach Anspruch 11, wobei sich nach dem Applizieren des viskosen Strangs (10) das Drahtbündel (6) in der Nut (1) entspannt und dabei ein Teil des Strangs (10) zur Bildung eines Formschlusses hinter einen Nutvorsprung (5) an der Nut (1) gedrückt wird.

13. Verfahren nach einem der vorhergehenden Ansprüche, wobei der viskose Strang (10) nach dem Einbringen in die Nut (1) oberflächenbündig abgezogen wird.

14. Vorrichtung zum Füllen einer Nut (1) einer elektrischen Maschine **gekennzeichnet durch**
- eine Mischeinrichtung zum Mischen einer ersten Komponente eines zweikomponentigen Duromersystems, wobei in die erste Komponente magnetisierbare Partikel eingemischt sind, und einer zweiten Komponente des zweikomponentigen Duromersystems, wobei in die zweite Komponente magnetisierbare Partikel eingemischt sind, und
- eine Applikationseinrichtung zum Einbringen der gemischten Komponenten in die Nut (1) der elektrischen Maschine.

15. Vorrichtung nach Anspruch 14, wobei die Mischeinrichtung entweder
- einen ersten Schneckenextruder (14) zum Fördern der ersten Komponente,
- einen zweiten Schneckenextruder (15) zum Fördern der zweiten Komponente und
- einen Mischer (17) zum Mischen der ersten Komponente von dem ersten Schneckenextruder (14) mit der zweiten Komponente von dem zweiten Schneckenextruder (15),
oder
- ein statisches Mischrohr zum Mischen beider Komponenten aufweist.
